# EUROPEAN PATENT SPECIFICATION

(11) **EP 4 616 963 B1**
(45) Date of publication and mention of the grant of the patent: **07.10.2026**
(21) Application number: 24815498.1
(22) Date of filing: 29.05.2024
(51) Int. Cl.: B05C 11/00, G01G 17/04, B41J 2/045

(54) **DISCHARGE STATE INSPECTION METHOD, DISCHARGE STATE INSPECTION DEVICE, AND DROPLET INSPECTION SYSTEM**
ENTLADUNGSZUSTANDINSPEKTIONSVERFAHREN, ENTLADUNGSZUSTANDINSPEKTIONSVORRICHTUNG UND TRÖPFCHENINSPEKTIONSSYSTEM
PROCÉDÉ D'INSPECTION D'ÉTAT DE DÉCHARGE, DISPOSITIF D'INSPECTION D'ÉTAT DE DÉCHARGE, ET SYSTÈME D'INSPECTION DE GOUTTELETTES

(30) Priority: 30.05.2023 JP 2023088597
(43) Date of publication of application: 17.09.2025
(73) Proprietor: Musashi Engineering, Inc., Mitaka-shi, Tokyo 181-0011 (JP)
(72) Inventor: IKUSHIMA, Kazumasa, Mitaka-shi, Tokyo 181-0011 (JP)
(74) Representative: TBK
(86) International application number: PCT/JP2024/019632
(87) International publication number: WO 2024/248016

(56) References cited:
- JP-A- 2009 255 093
- JP-A- 2009 255 093
- JP-A- 2013 230 469
- JP-A- 2022 054 057
- JP-A- 2022 054 057
- US-A1- 2022 324 226

## Description

### Technical Field

The present invention relates to a discharge state inspection method, a discharge state inspection device, and a droplet inspection system.

### Background Art

Conventionally, there has been known a discharge device (or dispenser) that drops and applies liquid material such as chemical or liquid crystal. In this type of discharge device, a discharge amount sometimes varies due to curing/denaturing of liquid material, change in viscosity of the liquid material caused by temperature change, or the like. Therefore, the discharge amount of the liquid material is regularly measured with a weight scale such as an electronic balance and a discharge parameter is adjusted to correct the discharge amount (for example, see Paragraph [0033] in Patent Document 1).

Meanwhile, Patent Document 2 proposes a method in which, in order to omit a measuring step with a weight scale, a dropping amount of liquid crystal is successively fed back to a liquid crystal dropper based on images of dropping liquid crystal captured by a high-speed camera, and the dropping amount of the liquid crystal is adjusted.

However, there is a problem that even a high-speed camera can capture only a few images for one droplet and thus it is difficult to accurately recognize a droplet (see Paragraph [0004] in Patent Document 3). In addition, there is a problem that a higher-speed camera requires larger capacity for image data and longer time for image processing.

Thus, Patent Document 3 proposes to use, instead of a high-speed camera, an event sensor that includes pixels configured to photoelectrically convert optical signals to output pixel signals and outputs an event signal indicating a temporal luminance change in the optical signals based on the pixel signals.

Patent Document 4 also proposes a process of measuring the weight of the liquid discharged from the droplet discharge head.

### Prior Art List

### Patent Document

Patent Document 1: Japanese Patent Laid-Open Publication No. 2009-190012
Patent Document 2: Japanese Patent Laid-Open Publication No. 2006-195402
Patent Document 3: Japanese Patent Laid-Open Publication No. 2022-54057
Patent Document 4: Japanese Patent Laid-Open Publication No. 2009-255093

### Summary of the Invention

### Problems to be Solved by the Invention

When a discharge device has been used for a long time, adhered liquid material on a nozzle or the like may cause a droplet to fly abnormally. If the measurement with a weight scale is performed on droplets in the abnormal flying state, a discharge amount may not be measured accurately because the droplets do not land on the weight scale. Particularly, the existence of droplets that have not landed on the weight scale may result in a weight per droplet being calculated inaccurately, which prevents proper correction.

Further, a change in a flying direction or a flying speed of a droplet causes misalignment of a landing point on a workpiece or satellite (unexpected scattering). In a case where the discharge amount is weighed by one measurement instrument and the flying direction and the flying speed are measured by another measurement instrument, there is a problem that some liquid material is wasted every time the measurement is performed in the respective instruments.

Therefore, an object of the present invention is to provide a discharge state inspection method, a discharge state inspection device, and a droplet inspection system that can simultaneously inspect discharge amount and flying state of droplets.

### Means for Solving the Problems

[1] A discharge state inspection method according to the present invention includes: an ejection step of ejecting droplets from a discharge device toward a weight scale; an event data acquisition step of acquiring, by an event sensor, event data of droplets ejected from the discharge device; a weighing step of acquiring, from the weight scale, weight value data of droplets ejected in the ejection step; and an inspection step of inspecting a discharge amount of the discharge device based on the event data and the weight value data. In the inspection step, the discharge device is inspected for flying abnormality based on the event data.
[2] In the discharge state inspection method according to [1], in the inspection step, a number of droplets that are abnormally flying may be calculated based on the event data, and a discharge amount per droplet of the discharge device may be inspected based on the calculated number of droplets.
[3] In the discharge state inspection method according to [2], in the inspection step, inspection may be performed by detecting a droplet with an abnormal flying speed based on the event data.
[4] In the discharge state inspection method according to [2] or [3], in the inspection step, a number of droplets that do not land on the weight scale may be detected based on a flying direction of a droplet detected from the event data, and the discharge amount of the discharge device may be inspected based on a number of droplets after subtracting the number of droplets that do not land on the weight scale.
[5] In the discharge state inspection method according to any one of [1] to [4], in the inspection step, a reference weight may be calculated by multiplying a number of droplets that have landed on a weighing pan of the weight scale by a target discharge amount and compared with the weight value data, and when a difference amount between the reference weight and the weight value data is larger than a set threshold, abnormality may be determined.
[6] In the discharge state inspection method according to any one of [1] to [5], the inspection step may include following steps:
   (A) a step of adding a label to a droplet detected based on the event data;
   (B) a step of detecting a droplet with an abnormal flying speed based on the event data;
   (C) a step of detecting a number of droplets that do not land on the weight scale based on a flying direction of a droplet detected from the event data;
   (D) a step of calculating a number of droplets having the labels different from each other among droplets detected in the steps (B) and (C); and
   (E) a step of determining that there is flying abnormality when a ratio of the number of droplets calculated in the step (D) to a number of droplets ejected in the ejection step is a certain level or more.
[7] The discharge state inspection method according to [6] may further include a step of inspecting a discharge amount per droplet of the discharge device based on a number of droplets obtained by subtracting the number of droplets calculated in the step (D) from the number of droplets ejected in the ejection step.
[8] In the discharge state inspection method according to any one of [1] to [7], in the ejection step, one droplet discharged from the discharge device may have a weight smaller than measurement resolution of the weight scale, and the discharge of a droplet from the discharge device may be repeated at least until the measurement resolution of the weight scale is exceeded.
[9] In the discharge state inspection method according to any one of [1] to [8], in the ejection step, the discharge of a droplet from the discharge device may be repeated at least until ten times the measurement resolution is exceeded.
[10] A discharge state inspection device according to the present invention includes: a storage device that stores a discharge state inspection program for inspecting a discharge amount of a discharge device that discharges droplets; and a processing device configured to execute the discharge state inspection program. The discharge state inspection program includes: a means configured to acquire, from an event sensor, event data of droplets ejected from the discharge device disposed to face a weight scale; a means configured to acquire, from the weight scale, weight value data of the droplets ejected from the discharge device; and a droplet inspection means configured to inspect a discharge amount of the discharge device based on the weight value data and the event data. The droplet inspection means is configured to inspect the discharge device for flying abnormality based on the event data.
[11] A discharge state inspection system according to the present invention includes: a discharge device having a discharge port through which liquid material is discharged in a form of a droplet; a weight scale configured to measure a weight of liquid material discharged from the discharge device and output weight value data; an event sensor configured to output event data depending on an amount of change in an amount of light received from a light receiving range between the discharge port and the weight scale; and a discharge state inspection device configured to inspect a discharge amount of the discharge device based on the weight value data output by the weight scale. The discharge state inspection device is configured to inspect the discharge device for flying abnormality based on the event data.
[12] In the discharge state inspection system according to [11], the event sensor may include a first event sensor and a second event sensor, the first event sensor may be disposed in an X-direction that is perpendicular to a Z-direction from the discharge device toward the weight scale, and the second event sensor may be disposed in a Y-direction that is perpendicular to the Z-direction from the discharge device toward the weight scale and is perpendicular to the X-direction.

### Advantageous Effect of the Invention

According to the present invention, it is possible to simultaneously inspect discharge amount and flying state of droplets, and therefore it is possible to reduce liquid material to be wasted for inspection of a discharge state.

### Brief Description of the Drawings

[Fig. 1] Fig. 1 is a diagram illustrating a droplet inspection system according to embodiments.
[Fig. 2] Fig. 2 is a diagram illustrating a detection range of an EVS camera according to embodiments.
[Fig. 3] Fig. 3 is a view illustrating an application apparatus according to an exemplary embodiment.
[Fig. 4] Fig. 4 is a partial cross-sectional side view of a discharge state inspection device according to the exemplary embodiment.
[Fig. 5] Fig. 5 is a partial cross-sectional side view of a discharge state inspection device according to a variation.
[Fig. 6] Fig. 6 is a flowchart illustrating an inspection step according to the exemplary embodiment.

### Mode for Carrying out the Invention

### Embodiments of the present invention will be described below.

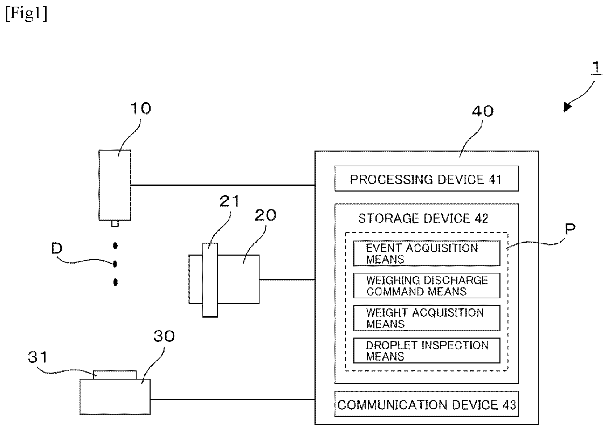

As illustrated in Fig. 1, a droplet inspection system 1 according to embodiments includes a discharge device 10, an EVS camera 20, a weight scale 30, and a discharge state inspection device 40.

The discharge device 10 discharges liquid material in the form of flying droplets from a discharge port. Examples of types that can be used as the discharge device 10 include: an air type in which discharge is performed by the action of pressurized gas; a jet type in which discharge is performed by the action of a rod reciprocating in a liquid chamber; and a plunger type in which discharge is performed by the action of a plunger sliding in a measuring unit.

The EVS camera 20 is an event-based camera including an event sensor that photoelectrically converts optical signals and outputs an event signal (event data) indicating a temporal luminance change in the optical signals. The event sensor is an asynchronous sensor that outputs event data only at a timing when an event occurs, and is sometimes also referred to as event-based vision sensor (EVS). While a camera including a synchronous image sensor represented by a CCD camera outputs frame data that is image data of one frame (screen) at a cycle of a vertical synchronization signal, the event sensor (or EVS) detects a luminance change of each pixel and outputs only changed data in combination with coordinates and time information. Thus, the event sensor can output data at high speed and with low latency. High-speed image processing is also possible because of small data volume.

The EVS camera 20 according to embodiments includes a storage device (not illustrated) that stores event data of a temporal luminance change for droplets D ejected from the discharge device 10, and outputs the stored event data to the discharge state inspection device 40. The EVS camera 20 outputs the event data in which coordinates xi and yi representing a position of a pixel at which an event occurs and a luminance change mi as the event are associated with time ti at which the event occurs. The EVS camera 20 has a clock internally, and a count value of the clock is recorded as the time ti of the event.

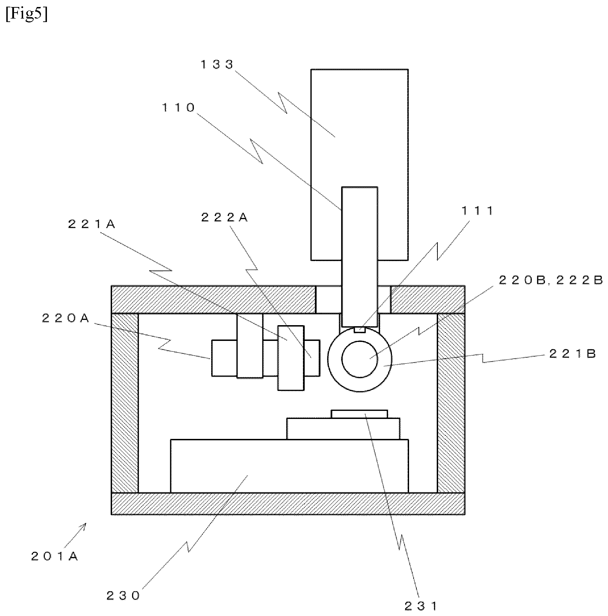

The EVS camera 20 according to embodiments is disposed in a direction (X-direction or Y-direction) that is perpendicular to a Z-direction from the discharge device 10 toward the weight scale 30. The EVS camera 20 according to embodiments includes a lighting device 21 having a plurality of light sources that are annularly arranged to light droplets D. The EVS camera 20 is disposed between the discharge device 10 at a weighing position and the weight scale 30. When a droplet D passes within an angle of view of the EVS camera 20, a luminance change due to the movement of the droplet D is detected as an event and stored in the storage device. The EVS camera 20 may include two event-based cameras to capture droplets D from two directions perpendicular to each other (see Fig. 5 described below).

The weight scale 30 is a device, such as an electronic balance, that measures a weight of droplets D ejected from the discharge device 10 and outputs weight value data thereof to the discharge state inspection device 40. The weight scale 30 includes a weighing pan 31 for keeping droplets D from the discharge device 10.

The discharge state inspection device 40, which is a computer, a programmable logic controller (PLC), or the like, including a processing device 41, a storage device 42 that stores a discharge state inspection program P, and a communication device 43, inspects a discharge state of the discharge device 10 by executing the discharge state inspection program P. The discharge state inspection device 40 is electrically connected to an input device and an output device (not illustrated). As the input device, a keyboard and a mouse can be used, for example, and as the output device, a display can be used, for example. The discharge state inspection device 40 can communicate with an external information terminal via the communication device 43.

The discharge state inspection program P includes: an event acquisition means for acquiring, from the EVS camera 20, event data of droplets D ejected from the discharge device 10 disposed to face the weight scale 30; a weighing discharge command means for instructing the discharge device 10 to discharge a droplet D for weighing a predetermined number of times; a weight acquisition means for acquiring, from the weight scale 30, weight value data of droplets D ejected from the discharge device 10; and a droplet inspection means for inspecting ejected droplets based on the event data.

When the processing device 41 executes the event acquisition means, the EVS camera 20 starts recording event data. When the processing device 41 executes the weighing discharge command means, a discharge command to eject a droplet D the specified number of times is transmitted to the discharge device 10. The same number of discharge commands as the specified number may be transmitted, or one discharge command to execute discharge the specified number of times may be transmitted. At this time, it is preferable to repeat the discharge of a droplet D until the amount reaches ten times to a thousand times measurement resolution of the weight scale 30.

The droplet inspection means can calculate the number of droplets, and a flying speed and a flying direction of a droplet based on the event data, and compares the event data with event data of a proper droplet Dₘ stored in advance in the storage device 42 to thereby inspect the discharge state of the discharge device 10. Further, the droplet inspection means calculates a reference weight by multiplying, by the above-described specified number, an average discharge amount per droplet ejected from the discharge device 10, or a discharge amount of a proper droplet Dₘ based on weight value data and event data measured for the same droplets. When the droplet inspection means determines that the discharge state of the discharge device 10 is abnormal, it causes the output device (not illustrated) or the external information terminal (not illustrated) to display a message describing details of the abnormality. Here, the droplet inspection means may automatically generate control information for correcting the abnormality in the discharge amount of the discharge device 10 and/or the droplet flying state based on the details of the determined abnormality, and output the control information to the discharge device 10.

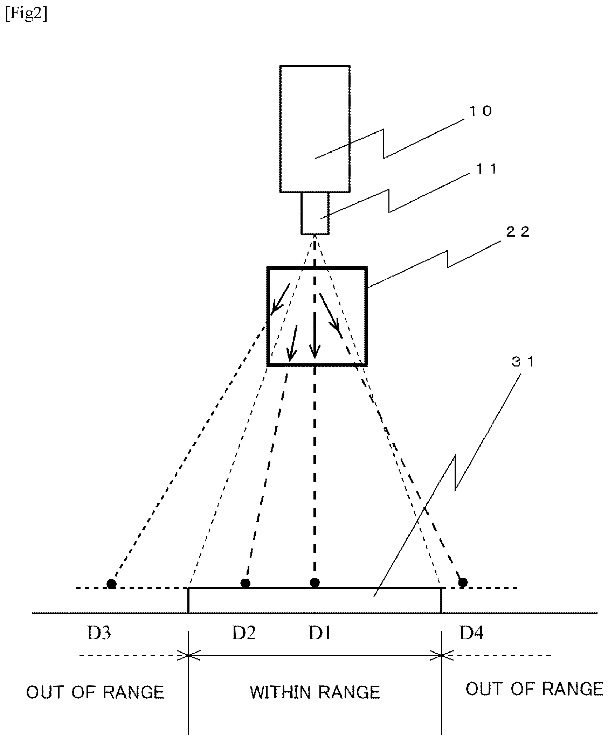

Fig. 2 is a diagram illustrating a detection range 22 of the EVS camera 20. When the discharge state of the discharge device 10 is inspected, the discharge device 10 is disposed vertically above the weight scale 30 at a predetermined distance, and the EVS camera 20 is installed between the discharge device 10 and the weight scale 30. As illustrated in Fig. 2, it is preferable to dispose the EVS camera 20 such that the detection range 22 is located above the middle point of a line connecting a discharge port of a nozzle 11 of the discharge device 10 at the weighing position and the weighing pan 31 of the weight scale 30. This is because the longer distance an abnormally-flying droplet D flies, the further away it is from a vertical line passing through the center of the discharge port, and thus there is a possibility that event data cannot be acquired when the detection range 22 is set in a lower position.

The droplet inspection means of the discharge state inspection program P estimates a landing point of a droplet D from the flying direction of the droplet D passing across the detection range 22. In Fig. 2, it is determined that droplets D1 and D2 land within a range of the weighing pan 31 and droplets D3 and D4 land outside the range of the weighing pan 31 by estimating landing points of the droplets D1 to D4 from event data of the droplets D1 to D4 within the detection range 22. In a case where it is determined that some droplets D land outside the range of the weighing pan 31, the number of droplets that land outside the range is subtracted from the number of droplets (commanded value) discharged for weighing.

In addition, the discharge state inspection device 40 generates an event image based on the event data output from the EVS camera 20, and detects a droplet to be tracked from the event image. The discharge state inspection device 40 executes a labeling process of adding labels such as D1, D2, D3, ··· to detected droplets. By adding labels to detected droplets, even when both the flying speed and the flying direction of a droplet are abnormal, duplicate counting of such a droplet that has a single label and multiple abnormalities can be avoided. Therefore, a process of counting droplets can be appropriately performed.

Further, the discharge state inspection device 40 has a function to generate display images of droplets for an operator to monitor the droplets and display them on the output device such as a display (not illustrated). The display image of a droplet is generated by a publicly known method, for example, on the basis of a positive image based on a positive event and a negative image based on a negative event (see, Patent Document 3). Since event data, which is different from frame format image data (frame data) output per frame period in synchronization with a vertical synchronization signal, is output every time an event occurs, it needs to be converted to frame data for generating the display image of a droplet.

Hereinafter, details of the present invention will be described using exemplary embodiments. However, the technical scope of the present invention is not limited to the exemplary embodiments, but the invention is defined by the claims.

### <Exemplary Embodiments>

### (Application Apparatus 101)

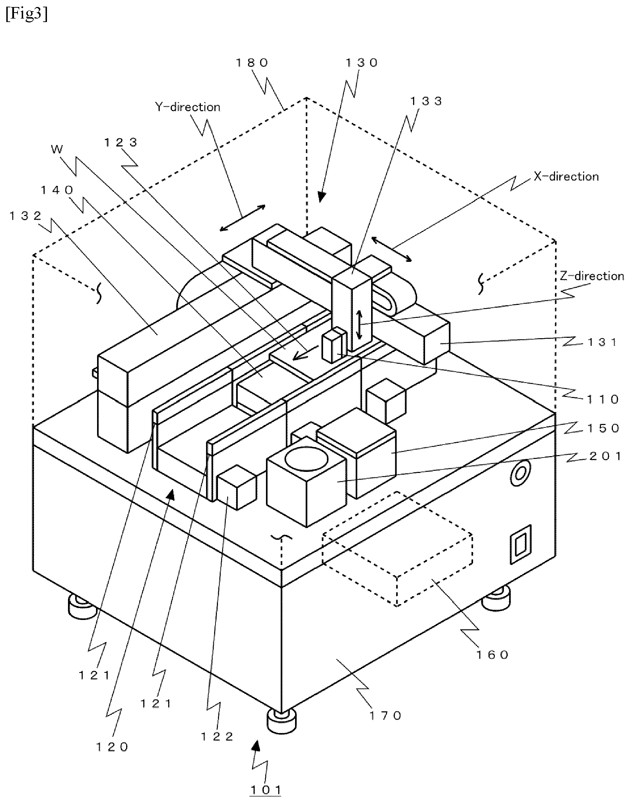

As illustrated in Fig. 3, an application apparatus 101 of an exemplary embodiment mainly includes: a discharge device 110 that discharges liquid material; a relative driving device 130 that moves the discharge device 110 and a worktable 140, on which a workpiece W is placed, relative to each other; a transport device 120; a dumping table 150; an application control device 160; and a droplet inspection device 201. In Fig. 3, for convenience of explanation, a cover 180 is represented by dotted lines with some parts omitted.

The discharge device 110 is a jet-type discharge device that discharges liquid material in the form of flying droplets from a discharge port by rapidly moving a discharging member (valve element) close to a bottom surface of a liquid chamber (valve seat) or colliding it against the valve seat and thereby applying inertial force to the liquid material. The discharge device 110 includes a nozzle 111 for discharging the liquid material, and operation thereof is controlled by the application control device 160. The liquid material discharged from the nozzle 111 is applied to a workpiece W in a form of a droplet.

The relative driving device 130 includes an X-driving device 131, a Y-driving device 132, and a Z-driving device 133 that move the discharge device 110 and the worktable 140 relative to each other in an X-direction, a Y-direction, and a Z-direction, respectively.

In the exemplary embodiment, the Y-driving device 132 extends in the Y-direction on an upper surface of a base 170, and the X-driving device 131 extends in the X-direction on the Y-driving device 132. The Z-driving device 133 is provided on the X-driving device 131, and the discharge device 110 is provided on the Z-driving device 133. The worktable 140 is installed on the upper surface of the base 170 so as to be positioned parallel to the Y-driving device 132 and below the X-driving device 131. This configuration allows the discharge device 110 and a workpiece W on the worktable 140 to move relative to each other in the X-direction, the Y-direction, and the Z-direction. The relative driving device 130 can move a tip of the nozzle 111 of the discharge device 110 to any position over a workpiece W at any speed under control of the application control device 160. Examples of devices that can be used as the relative driving device 130 include: a combined device of an electric motor, such as a servomotor or a stepping motor, and a ball screw; a device using a linear motor; and a device using a belt or a chain to transmit power.

The transport device 120 includes a rail 121, a transmission element (not illustrated), and a transport driving device 122. The rail 121 includes two members extending parallel in the Y-direction. The rail 121 is installed such that the distance between the two members is the same as a length of one side of a workpiece W. The rail 121 is provided with the transmission element that acts to transport a workpiece W along the extending direction of the rail 121. A belt, a chain, or the like can be used as the transmission element. The transmission element is driven by the transport driving device 122. An electric motor such as a servomotor or a stepping motor can be used as the transport driving device 122. By the action of the transmission element driven by the transport driving device 122, a workpiece W is transported in a transport direction 123 along the rail 121. The transport device 120 is connected to the application control device 160, which controls a transport speed, start and stop of transport, and the like.

The worktable 140 including a rectangular parallelepiped member can be lifted and lowered by a lifting and lowering device (not illustrated). The worktable 140 is installed between the rail members 121 of the transport device 120. The worktable 140 has a width in the X-direction that is slightly smaller than the distance between the rail members 121 of the transport device 120 so as not to come into contact with the rail members 121 of the transport device 120. When a workpiece W is transported, the worktable 140 is lowered to a position where it does not come into contact with the workpiece W. When application work is performed on a workpiece W, the worktable 140 is lifted so that the workpiece W can be fixed between the worktable 140 and a retaining plate (not illustrated) provided on the rail 121. In order to more securely fix the workpiece W, for example, a suction and fixation mechanism may be provided that fixes the workpiece W by sucking the air through a plurality of holes leading from an inside of the worktable 140 to an upper surface thereof.

The dumping table 150 is installed near the worktable 140 on the upper surface of the base 170 within a movement range of the relative driving device 130. A surface of the dumping table 150 includes a dumping area to which the liquid material can be applied. The dumping table 150 is used for removing dried liquid material from the nozzle tip by applying the liquid material to the dumping area before the application work is started. Further, by performing application to the dumping area under the same condition as that for a workpiece W, adjustment can also be made so that the liquid material is applied to a workpiece W in a desired shape and size. Instead of this, a plate-like body for dumping may be separately prepared and fixed by the above-described suction and fixation mechanism to form a dumping table.

The application control device 160 is an information processing apparatus (computer) including a processing device, a storage device that stores an application program and the above-described discharge state inspection program P, and a communication device. The application control device 160 controls operation of the discharge device 110, the transport device 120, and the relative driving device 130 by executing the application program. In addition, the application control device 160 functions as the above-described discharge state inspection device that inspects the discharge state of the discharge device 110 by executing the discharge state inspection program P. The application control device 160 is electrically connected to an input device and an output device (not illustrated). In the exemplary embodiment, a touch panel (not illustrated) functions as both the input device and the output device. Note that the application control device 160 may include a plurality of control devices that are physically different from each other. For example, the application control device 160 may include: a first control device including a storage device that stores the application program, a processing device, and a communication device; and a second control device including a storage device that stores the discharge state inspection program P, a processing device, and communication device.

The application apparatus 101 of the exemplary embodiment can be equipped with an image capturing device and a ranging device (not illustrated). The image capturing device is constituted by, for example, a CCD camera, and is used to capture images of a component or an identification mark on a workpiece W, and applied liquid material. The ranging device is constituted by, for example, a laser displacement meter, and is used to measure the distance to a surface of the workpiece W, a surface of the component on the workpiece W, or a surface of the liquid material applied to the workpiece W.

The image capturing device and the ranging device are provided on the Z-driving device 133 together with the discharge device 110, and can be moved relative to a workpiece W on the worktable 140. Here, the image capturing device and the ranging device may be integrally provided via a mounting plate. The image capturing device and the ranging device are connected to the application control device 160, which can control operation of the image capturing device and the ranging device, and can store and process measurements. Image data captured by the image capturing device and distance data measured by the ranging device are used for checking a state of applied liquid material, alignment of the nozzle of the discharge device 110 with respect to a workpiece W, and the like.

The application apparatus 101 of the exemplary embodiment is connected to an instruction terminal (not illustrated) that makes it possible to instruct the application control device 160 on positioning of the relative driving device 130, operation of the discharge device 110, and the like. The application control device 160 can store an application program having a group of related instructions that are sequentially set, and execute it. In other words, the application control device 160 can operate the discharge device 110 and the relative driving device 130 according to the instructions. Examples of available instruction terminals include: a dedicated terminal including a simple display device and a plurality of switches; and a personal computer with dedicated software installed. With the instruction terminal, it is possible to start and stop the operation of the application apparatus 101 based on the application program stored in the application control device 160. Instead of the instruction terminal, the above-described application control device 160 and the touch panel can be used to give instructions.

A top of the base 170, on which the discharge device 110, the worktable 140, the relative driving device 130, and the like are provided, is covered by the cover 180. With the cover 180, it is possible to prevent dust from entering the application apparatus 101, and prevent careless contact between an operator and a moving portion of the relative driving device 130 or the like. The cover 180 may have an openable door for the operator to easily access the application apparatus 101. The above-described touch panel may be provided on a lateral surface of the cover 180 so that the application apparatus 101 can also be operated from outside the cover 180. Further, the cover 180 may be provided with an opening for a workpiece W to be transported into or out of the cover 180.

### (Droplet Inspection Device 201)

The droplet inspection device 201 includes a housing 210, an EVS camera 220, and a weight scale 230.

The EVS camera 220 includes: an event sensor (not illustrated) that includes pixels configured to photoelectrically convert optical signals to output pixel signals, and outputs event data indicating a temporal luminance change in the optical signals based on the pixel signals to the application control device 160; a storage device (not illustrated) that stores the event data; and an annular lighting device 221. The weight scale 230 is an electronic balance having a weighing pan 231, and outputs measured weight value data to the application control device 160.

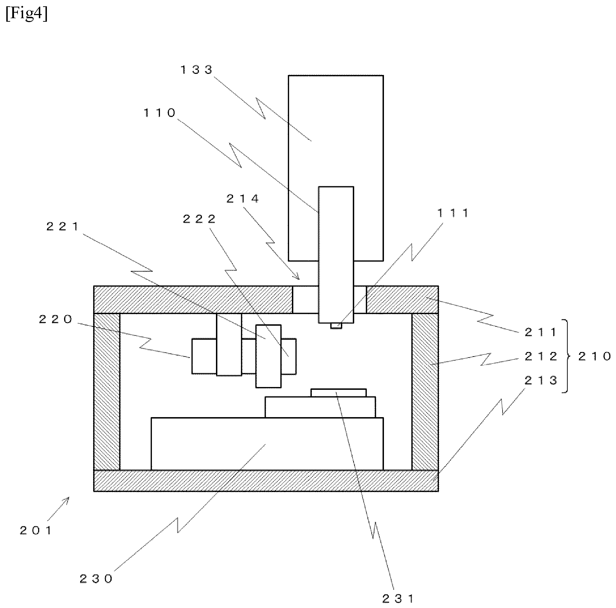

Fig. 4 is a partial cross-sectional side view of the droplet inspection device 201.

The rectangular parallelepiped housing 210 has a space surrounded by a top plate 211, four side plates 212, and a bottom plate 213. The EVS camera 220 including the annular lighting device 221 and a lens 222 is attached to a bottom surface of the top plate 211, and the weight scale 230 is placed on the bottom plate 213. The top plate 211 is provided with a circular through-hole 214 just above the weighing pan 231. The through-hole 214 is large enough for the discharge device 110 to enter, or may be large enough for at least the nozzle provided at the tip of the discharge device 110 to enter.

When an inspection step for checking the discharge state is performed, the relative driving device 130 is activated to move the discharge device 110 to a position vertically above the weighing pan 231 of the weight scale 230. Thereafter, the Z-driving device 133 is operated to move the discharge device 110 downward into the droplet inspection device 201 through the through-hole 214 of the droplet inspection device 201.

By the EVS camera 220 detecting the discharge device 110, it is possible to obtain a relationship between coordinates of the EVS camera 220 (inspection coordinates) calculated from a detected event and coordinates of the relative driving device 130 (application coordinates) corresponding to the inspection coordinates. After the EVS camera 220 detects a tip position of the discharge device 110, the discharge device 110 is moved upward. The coordinates of the relative driving device 130 at the time when the tip of the nozzle 111 reaches a top limit position of detection of the EVS camera 220 are stored in the storage device as reference coordinates (weighing position). It should be noted that the inspection step can be performed in a state where the discharge device 110 is at the reference coordinates, at a position lowered from the reference coordinates, or at a position lifted from the reference coordinates (that is, any position vertically above the weighing pan 231 can be set as the weighing position). In any case, since the corresponding relationship has been obtained between the coordinates of the EVS camera 220 (inspection coordinates) and the coordinates of the relative driving device 130 (application coordinates), whether a droplet detected by the EVS camera 220 will land on the weighing pan 231 can be determined from an ejection direction of the droplet.

Fig. 5 is a partial cross-sectional side view of a droplet inspection device 201A according to a variation.

The droplet inspection device 201A includes a first EVS camera 220A that performs capturing in a first direction (X-direction) and a second EVS camera 220B that performs capturing in a second direction (Y-direction) perpendicular to the first direction. The first EVS camera 220A includes an annular lighting device 221A and a lens 222A. Similarly, the second EVS camera 220B includes an annular lighting device 221B and a lens 222B. The first EVS camera 220A acquires event data of a droplet D passing across a capturing range extending in the X-direction and the Z-direction (XZ-plane), and the second EVS camera 220B acquires event data of the droplet D passing across a capturing range extending in the Y-direction and the Z-direction (YZ-plane), so that deviation of a flying direction in the X-direction and the Y-direction can be detected. With one EVS camera, depth deviation in detected data (that is, a closer droplet being detected as larger and a farther droplet being detected as smaller) needs to be corrected. However, in the variation using the two EVS cameras 220A and 220B, a droplet flying state can be more accurately detected.

### (Inspection Step)

The inspection step is carried out with a predetermined correction periodicity, or by user's instruction at any timing. As the inspection periodicity, for example, time information input by a user, the number of workpieces W processed, or the like is set.

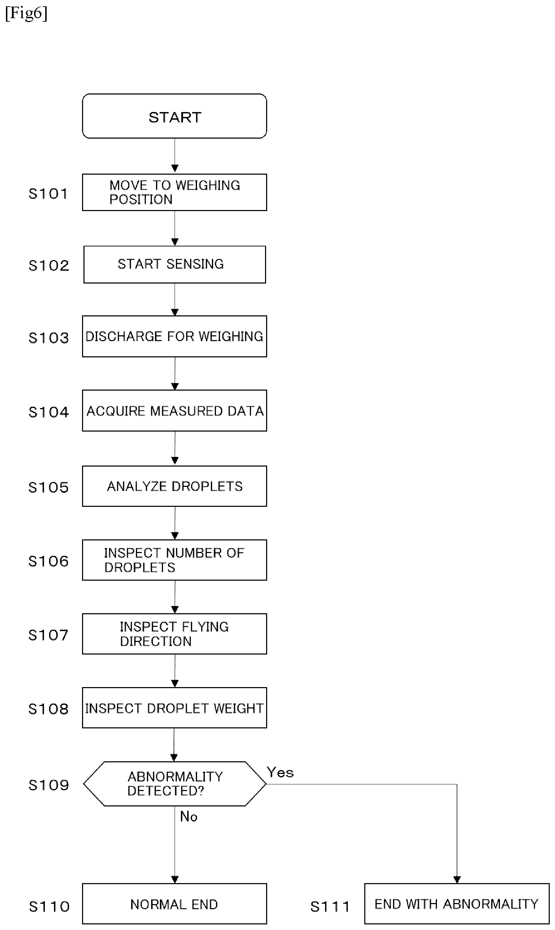

The inspection step will be described with reference to a flowchart in Fig. 6.

When the inspection step is started, the application control device 160 activates the relative driving device 130 to move the discharge device 110 to the weighing position above the weight scale 230 (S101). Subsequently, the application control device 160 executes the above-described event acquisition means to start sensing by the EVS camera 220 (S102). As a result, event data of a luminance change due to the movement of droplets D discharged from the discharge device 110 can be stored in the storage device of the EVS camera 220.

The application control device 160 executes the weighing discharge command means to execute the ejection step of successively discharging liquid material for weighing in a form of a droplet from the discharge device 110 toward the weighing pan 231 of the weight scale 230 (S103). In this ejection step, since one droplet discharged from the discharge device 110 has a weight smaller than the measurement resolution of the weight scale 230, the discharge of a droplet D from the discharge device 110 is repeated at least until ten times the measurement resolution of the weight scale 230 is exceeded.

After the ejection step ends, the application control device 160 acquires a series of event data from the EVS camera 220, acquires weight value data from the weight scale 230, and store them in the storage device (S104). Here, the event data may be sequentially transmitted from the EVS camera 220 to the application control device 160 during the ejection step.

The application control device 160 executes the droplet inspection means to generate event images based on the event data, detect droplets to be tracked from the event image, and add a label to each droplet (S105).

The application control device 160 executes the droplet inspection means to count the number of droplets at least in an abnormal flying state based on the event data, and inspect the discharge state of the discharge device 110 (S106). For detecting the number of abnormal droplets, a speed of each droplet D is also calculated based on the event data, and a droplet of which speed is abnormal is determined as a droplet with an abnormal speed. The application control device 160 has event data at the time when droplets Dₘ of the same discharge amount are discharged under a proper discharge condition, and a speed of the droplets Dₘ, stored in advance in the storage device. The measured speed of each droplet D is compared with the speed of the droplet Dₘ (reference speed). If a difference amount is equal to or smaller than a threshold (for example, ±5% of the reference speed), the speed is determined to be normal, and if the difference amount is larger than the threshold, the speed is determined to be abnormal, and the determination results are stored in the storage device. Here, the number of droplets obtained by subtracting the number of droplets that have been determined to be abnormal from the number of droplets discharged during the ejection step may be used to perform droplet weight inspection (S108) to be described below.

The application control device 160 executes the droplet inspection means to detect and inspect a flying direction of each droplet D based on the event data (S107). Particularly, the flying direction of a droplet D is calculated from coordinate data of the droplet D at a plurality of time points. If the weighing pan 231 is located on an extension line of the calculated flying direction, the flying direction is determined to be normal, ant if the weighing pan 231 is not located on the extension line of the flying direction, the flying direction is determined to be abnormal, and the determination results are stored in the storage device. Alternatively, if a difference amount between the vertical direction and the calculated flying direction is equal to or smaller than a threshold (for example, ±5%), the flying direction may be determined to be normal, and if the difference amount is larger than the threshold, the flying direction may be determined to be abnormal, and the determination results may be stored in the storage device.

The application control device 160 executes the droplet inspection means to inspect a weight of a droplet D based on the weight value data (S108). The application control device 160 calculates a discharge amount per droplet using the number obtained by subtracting the number of droplets that do not land on the weighing pan 231 calculated in S107 from the total number of droplets detected in S106. Here, the discharge amount per droplet may be calculated by dividing a discharged amount by the number obtained by subtracting the number of droplets that have been determined to be abnormal in the speed in S106 and droplets that have been determined not to land on the weighing pan 231 in S107 from the number of discharges specified in the weighing discharge command means. At this time, when droplets that have been determined to be abnormal in S106 and S107 have the same label, they shall not be double-counted.

The calculated discharge amount per droplet is compared with a target discharge amount per discharge (ideal single discharge amount) to be discharged by executing the weighing discharge command means. If a difference amount is equal to or smaller than a threshold (for example, ±5%), the calculated discharge amount is determined to be normal, and if the difference amount is larger than the threshold, the calculated discharge amount is determined to be abnormal, and the determination result is stored in the storage device. Alternatively, the weight value data may be compared with a reference weight, which is obtained by multiplying the ideal single discharge amount (target discharge amount) by the number of droplets that have landed on the weighing pan 231. If a difference amount is equal to or smaller than a threshold (for example, ±5%), the weight value data may be determined to be normal, and if the difference amount is larger than the threshold, the weight value data may be determined to be abnormal.

In a case where no abnormality has been detected in all of the droplet number inspection in S106, the flying direction inspection in S107, and the droplet weight inspection in S108, a message notifying that no abnormality has been detected is displayed on the output device (not illustrated), and a record of normal ending is stored in the storage device together with termination time (S109, 110). In a case where abnormality has been detected in any of the droplet number inspection in S106, the flying direction inspection in S107, and the droplet weight inspection in S108, a message notifying of details of the abnormality is displayed on the output device (not illustrated), and a record of ending with abnormality is stored in the storage device together with termination time (S109, 111). In S109, a reference number for the number of abnormal droplets may be provided in each of the droplet number inspection in S106, the flying direction inspection in S107, and the droplet weight inspection in S108, and it may be determined that there has been abnormality only when the reference number is exceeded. For example, whether the number of droplets is abnormal may be determined based on whether the number of droplets is equal to or less than a reference number obtained by multiplying the total number of discharges specified in a discharge command issued during the ejection step by a certain percentage (for example, 2% or 3%).

According to the application apparatus 101 of the exemplary embodiment described above, it is possible to check the droplet flying state by the EVS camera 220 detecting a plurality of droplets D discharged toward the weight scale 230 and to weigh, at the same time, the droplets used for checking the flying state with the weight scale 230 for use in discharge amount correction. Therefore, the liquid material ejected for the discharge amount correction is not wasted, and time for discharge amount adjustment and time required for checking the flying state can be shortened, resulting in the contribution to improved productivity.

In addition, since event data acquired by the EVS camera 220 is handled with less data volume than frame data, image processing for droplets D can be performed at high speed. That is, even with a discharge device like a jet-type discharge device that discharges dozens to hundreds of droplets per second or more, the droplets can be tracked by the EVS camera 220. Therefore, droplets that do not land on the weighing pan 231 can be excluded to accurately calculate a discharge amount per discharge.

Although preferred embodiment examples of the present invention have been described above, the technical scope of the present invention is not limited to the descriptions of the above embodiment examples. Various alterations and modifications can be applied without departing from the technical idea of the present invention, and such altered or modified modes also fall within the technical scope of the present invention which is defined by the claims.

For example, in the droplet number inspection (S106), instead of counting the total number of droplets ejected during the ejection step, only the number of droplets that have been determined to be abnormal in the flying speed may be counted. Whether abnormality has occurred may be determined based on whether the number of abnormal droplets is equal to or less than a reference number obtained by multiplying the number of shots in an ejection command issued during the ejection step by a certain percentage (for example, 2% or 3%). Particularly, it is disclosed that, in a case where the number of shots in the ejection command issued during the ejection step is 1000, it may be determined that abnormality has occurred only when the number of droplets that have been determined to be abnormal in the flying speed exceeds 20 (reference number of 2%) or 30 (reference number of 3%).

In another variation, for example, the number of droplets to be ejected per unit time (target number of droplets) may be set, and there may be added a step of determining whether abnormality has occurred based on whether the difference between the total number of droplets counted by the droplet inspection means and the target number of droplets is equal to or less than a value obtained by multiplying the target number of droplets by a certain percentage (for example, 2% or 3%).

### List of Reference Symbols

1: droplet inspection system / 10: discharge device / 11: nozzle / 20: EVS camera / 21: lighting device / 30: weight scale / 31: weighing pan / 40: discharge state inspection device / 101: application device / 110: discharge device / 111: nozzle / 201: droplet inspection device / 220: EVS camera / 221: lighting device / 230: weight scale / 231: weighing pan / D: droplet / W: workpiece

## Claims

1. A discharge state inspection method comprising:
an ejection step of ejecting droplets from a discharge device (10, 110) toward a weight scale;
an event data acquisition step of acquiring, by an event sensor (20, 220), event data of droplets ejected from the discharge device (10, 110);
a weighing step of acquiring, from the weight scale, weight value data of droplets ejected in the ejection step; and
an inspection step of inspecting a discharge amount of the discharge device (10, 110) based on the event data and the weight value data,
wherein, in the inspection step, the discharge device (10, 110) is inspected for flying abnormality based on the event data.

2. The discharge state inspection method according to claim 1, wherein, in the inspection step, a number of droplets that are abnormally flying is calculated based on the event data, and a discharge amount per droplet of the discharge device (10, 110) is inspected based on the calculated number of droplets.

3. The discharge state inspection method according to claim 2, wherein, in the inspection step, inspection is performed by detecting a droplet with an abnormal flying speed based on the event data.

4. The discharge state inspection method according to claim 2 or 3, wherein, in the inspection step, a number of droplets that do not land on the weight scale is detected based on a flying direction of a droplet detected from the event data, and the discharge amount of the discharge device (10, 110) is inspected based on a number of droplets after subtracting the number of droplets that do not land on the weight scale.

5. The discharge state inspection method according to any one of claims 1 to 4, wherein, in the inspection step, a reference weight is calculated by multiplying a number of droplets that have landed on a weighing pan of the weight scale by a target discharge amount and is compared with the weight value data, and when a difference amount between the reference weight and the weight value data is larger than a set threshold, abnormality is determined.

6. The discharge state inspection method according to any one of claims 1 to 5, wherein the inspection step includes following steps:
(A) a step of adding a label to a droplet detected based on the event data;
(B) a step of detecting a droplet with an abnormal flying speed based on the event data;
(C) a step of detecting a number of droplets that do not land on the weight scale based on a flying direction of a droplet detected from the event data;
(D) a step of calculating a number of droplets having the labels different from each other among droplets detected in the steps (B) and (C); and
(E) a step of determining that there is flying abnormality when a ratio of the number of droplets calculated in the step (D) to a number of droplets ejected in the ejection step is a certain level or more.

7. The discharge state inspection method according to claim 6, further comprising a step of inspecting a discharge amount per droplet of the discharge device (10, 110) based on a number of droplets obtained by subtracting the number of droplets calculated in the step (D) from the number of droplets ejected in the ejection step.

8. The discharge state inspection method according to any one of claims 1 to 7, wherein, in the ejection step, one droplet discharged from the discharge device (10, 110) has a weight smaller than measurement resolution of the weight scale, and the discharge of a droplet from the discharge device (10, 110) is repeated at least until the measurement resolution of the weight scale is exceeded.

9. The discharge state inspection method according to any one of claims 1 to 8, wherein, in the ejection step, the discharge of a droplet from the discharge device (10, 110) is repeated at least until ten times the measurement resolution is exceeded.

10. A discharge state inspection device (40) comprising:
a storage device that stores a discharge state inspection program for inspecting a discharge amount of a discharge device (10, 110) that discharges droplets; and a processing device configured to execute the discharge state inspection program,
wherein the discharge state inspection program includes:
a means configured to acquire, from an event sensor (20, 220), event data of droplets ejected from the discharge device (10, 110) disposed to face a weight scale;
a means configured to acquire, from the weight scale, weight value data of the droplets ejected from the discharge device (10, 110); and
a droplet inspection means configured to inspect a discharge amount of the discharge device (10, 110) based on the weight value data and the event data,
wherein the droplet inspection means is configured to inspect the discharge device (10, 110) for flying abnormality based on the event data.

11. A droplet inspection system comprising:
a discharge device (10, 110) having a discharge port through which liquid material is discharged in a form of a droplet;
a weight scale (30, 230) configured to measure a weight of liquid material discharged from the discharge device (10, 110) and output weight value data;
an event sensor (20, 220) configured to output event data depending on an amount of change in an amount of light received from a light receiving range between the discharge port and the weight scale (30, 230); and
a discharge state inspection device (40) configured to inspect a discharge amount of the discharge device (10, 110) based on the weight value data output by the weight scale (30, 230),
wherein the discharge state inspection device (40) is configured to inspect the discharge device (10, 110) for flying abnormality based on the event data.

12. The droplet inspection system according to claim 11, wherein the event sensor (20, 220) includes a first event sensor (20, 220) and a second event sensor (20, 220),
the first event sensor (220A) is disposed in an X-direction that is perpendicular to a Z-direction from the discharge device (10, 110) toward the weight scale (30, 230), and
the second event sensor (220B) is disposed in a Y-direction that is perpendicular to the Z-direction from the discharge device (10, 110) toward the weight scale (30, 230) and is perpendicular to the X-direction.

## Patentansprüche

1. Entladestatusinspektionsverfahren mit
einem Ausstoßschritt für ein Ausstoßen von Tröpfchen von einer Entladevorrichtung (10, 110) zu einer Waage,
einem Eventdatenerwerbsschritt für ein Erwerben von Eventdaten von in dem Ausstoßschritt ausgestoßenen Tröpfchen von der Entladevorrichtung (10, 110) durch einen Eventsensor (20, 220),
einem Wiegeschritt für einen Erwerb von Gewichtswertdaten der in dem Ausstoßschritt ausgestoßenen Tröpfchen von der Waage, und
einem Inspektionsschritt für eine Inspektion einer Entlademenge der Entladevorrichtung (10, 110) basierend auf den Eventdaten und den Gewichtswertdaten, wobei
in dem Inspektionsschritt die Entladevorrichtung (10, 110) basierend auf den Eventdaten auf Flugabnormalitäten inspiziert wird.

2. Entladestatusinspektionsverfahren nach Anspruch 1, wobei
in dem Inspektionsschritt eine Anzahl von abnormal fliegenden Tröpfchen basierend auf den Eventdaten berechnet wird, und eine Entlademenge pro Tröpfchen von der Entladevorrichtung (10, 110) basierend auf der berechneten Anzahl von Tröpfchen inspiziert wird.

3. Entladestatusinspektionsverfahren nach Anspruch 2, wobei
in dem Inspektionsschritt Inspektion ausgeführt wird, in dem ein Tröpfchen mit einer abnormalen Fluggeschwindigkeit basierend auf den Eventdaten detektiert wird.

4. Entladestatusinspektionsverfahren nach einem der Ansprüche 2 und 3, wobei in dem Inspektionsschritt eine Anzahl von Tröpfchen die nicht auf der Waage landen basierend auf einer Flugrichtung eines detektierten Tröpfchens von den Eventdaten detektiert wird, und die Entlademenge der Entladevorrichtung (10, 110) wird basierend auf einer Anzahl von Tröpfchen nach Subtraktion der Anzahl von nicht auf der Waage landenden Tröpfchen detektiert.

5. Entladestatusinspektionsverfahren nach einem der Ansprüche 1 bis 4, wobei in dem Inspektionsschritt ein Referenzgewicht berechnet wird, indem eine Anzahl von Tröpfchen, die auf einer Waagschale der Waage gelandet sind, mit einer Zielentlademenge multipliziert wird, und mit den Gewichtswertdaten verglichen wird, und wenn eine Differenzmenge zwischen dem Referenzgewicht und den Gewichtswertdaten größer als ein festgelegter Schwellwert ist, wird Abnormalität bestimmt.

6. Entladestatusinspektionsverfahren nach einem der Ansprüche 1 bis 5, wobei der Inspektionsschritt die folgenden Schritte umfasst
(A) einen Schritt für ein Hinzufügen eines Labels zu einem detektierten Tröpfchen basierend auf den Eventdaten,
(B) einen Schritt für ein Detektieren eines Tröpfchens mit einer abnormalen Fluggeschwindigkeit basierend auf den Eventdaten,
(C) einen Schritt für ein Detektieren einer Anzahl von Tröpfchen die nicht auf der Waage landen basierend auf einer Flugrichtung eines detektierten Tröpfchens von den Eventdaten,
(D) einen Schritt für ein Berechnen einer Anzahl von Tröpfchen die voneinander verschiedene Labels aufweisen unter den in Schritt (B) und (C) detektierten Tröpfchen,
(E) einen Schritt für eine Bestimmung eines Vorhandenseins einer Flugabnormalität, wenn eine Rate der Anzahl von in dem Schritt (D) berechneten Tröpfchen zu einer Anzahl von in dem Ausstoßschritt ausgestoßenen Tröpfchen auf einem bestimmten Niveau oder höher ist.

7. Entladestatusinspektionsverfahren nach Anspruch 6, ferner umfassend
einen Schritt für eine Inspektion einer Entlademenge pro Tröpfchen von der Entladevorrichtung (10, 110) basierend auf einer durch Subtraktion der in dem Schritt (D) berechneten Anzahl von Tröpfchen von der Anzahl von in dem Ausstoßschritt ausgestoßenen Tröpfchen gewonnenen Anzahl von Tröpfchen.

8. Entladestatusinspektionsverfahren nach einem der Ansprüche 1 bis 7, wobei
in dem Ausstoßschritt ein von der Entladevorrichtung (10, 110) entladenes Tröpfchen ein kleineres Gewicht hat als die Messauflösung der Waage, und die Entladung eines Tröpfchens von der Entladevorrichtung (10, 110) zumindest solange wiederholt wird, bis die Messauflösung der Waage überschritten ist.

9. Entladestatusinspektionsverfahren nach einem der Ansprüche 1 bis 8, wobei in dem Ausstoßschritt die Entladung eines Tröpfchens von der Entladevorrichtung (10, 110) zumindest solange wiederholt wird, bis das zehnfache der Messauflösung überschritten ist.

10. Entladestatusinspektionsvorrichtung (40) mit
einer Speichervorrichtung, die ein Entladestatusinspektionsprogramm für eine Inspektion einer Entlademenge von einer Tröpfchen entladenden Entladevorrichtung (10,110) speichert, und
eine Verarbeitungsvorrichtung, die dazu eingerichtet ist, um das Entladestatusinspektionsprogramm auszuführen, wobei das Entladestatusinspektionsprogramm umfasst
Mittel, dazu eingerichtet, um von einem Eventsensor (20, 220) Eventdaten von von der in Richtung einer Waage angeordneten Entladevorrichtung (10, 110) ausgestoßenen Tröpfchen zu erwerben,
Mittel, dazu eingerichtet, um von der Waage Gewichtswertdaten der von der Entladevorrichtung (10, 110) ausgestoßenen Tröpfchen zu erwerben, und
Tröpfcheninspektionsmittel, dazu eingerichtet um eine Entlademenge der Entladevorrichtung (10, 110) basierend auf den Gewichtswertdaten und den Eventdaten zu inspizieren, wobei das Tröpfcheninspektionsmittel dazu eingerichtet ist basierend auf den Eventdaten die Entladevorrichtung (10, 110) auf Flugabnormalitäten zu prüfen.

11. Tröpfcheninspektionssystem mit
einer Entladevorrichtung (10, 110), die eine Entladeöffnung aufweist, durch die Flüssigmaterial in einer Form eines Tröpfchens entladen wird,
einer Waage (30, 230), die dazu eingerichtet ist, um ein Gewicht von von der Entladevorrichtung entladenem Flüssigmaterial zu messen und Gewichtswertdaten auszugeben,
einem Eventsensor (20, 220), der dazu eingerichtet ist, um Eventdaten auszugeben abhängig von einer Menge an Veränderung in einer von einem Lichtempfangsbereich empfangenen Menge an Licht zwischen der Entladeöffnung und der Waage (30, 230), und
einer Entladestatusinspektionsvorrichtung (40), die dazu eingerichtet ist, um eine Entlademenge der Entladevorrichtung (10, 110) basierend auf den von der Waage (30, 230) ausgegebenen Gewichtswertdaten zu inspizieren,
wobei die Entladestatusinspektionsvorrichtung (40) dazu eingerichtet ist, um die Entladevorrichtung (10, 110) auf Flugabnormalitäten basierend auf den Eventdaten zu inspizieren.

12. Tröpfcheninspektionssystem nach Anspruch 11, wobei der Eventsensor (20, 220) einen ersten Eventsensor (20, 220) und einen zweiten Eventsensor (20, 220) umfasst,
der erste Eventsensor (220A) ist in einer X-Richtung, die senkrecht zu einer Z-Richtung von der Entladevorrichtung (10, 110) in Richtung Waage (30, 330) ist, angebracht, und
der zweite Eventsensor (220B) ist in einer Y-Richtung, die senkrecht zu der Z-Richtung von der Entladevorrichtung (10, 110) in Richtung Waage (30, 330) ist und die senkrecht zu der X-Richtung ist, angebracht.

## Revendications

1. Procédé d'inspection d'état d'expulsion, comprenant :
une étape d'éjection consistant à éjecter des gouttelettes à partir d'un dispositif d'expulsion (10, 110) vers une balance à peser ;
une étape d'acquisition de données d'événement consistant à acquérir, par un capteur d'événement (20, 220), des données d'événement de gouttelettes éjectées à partir du dispositif d'expulsion (10, 110) ;
une étape de pesage consistant à acquérir, en provenance de la balance à peser, des données de valeur de poids de gouttelettes éjectées dans l'étape d'éjection ; et
une étape d'inspection consistant à inspecter une quantité d'expulsion du dispositif d'expulsion (10, 110) sur la base des données d'événement et des données de valeur de poids,
dans lequel, dans l'étape d'inspection, le dispositif d'expulsion (10, 110) est inspecté pour déterminer s'il existe une anomalie de vol, sur la base des données d'événement.

2. Procédé d'inspection d'état d'expulsion selon la revendication 1, dans lequel, dans l'étape d'inspection, un nombre de gouttelettes qui sont en vol anormal est calculé sur la base des données d'événement, et une quantité d'expulsion par gouttelette du dispositif d'expulsion (10, 110) est inspectée sur la base du nombre calculé de gouttelettes.

3. Procédé d'inspection d'état d'expulsion selon la revendication 2, dans lequel, dans l'étape d'inspection, l'inspection est réalisée en détectant une gouttelette avec une vitesse de vol anormale sur la base des données d'événement.

4. Procédé d'inspection d'état d'expulsion selon la revendication 2 ou 3, dans lequel, dans l'étape d'inspection, un nombre de gouttelettes qui n'atterrissent pas sur la balance à peser est détecté sur la base d'une direction de vol d'une gouttelette détectée à partir des données d'événement, et la quantité d'expulsion du dispositif d'expulsion (10, 110) est inspectée sur la base d'un nombre de gouttelettes après avoir soustrait le nombre de gouttelettes qui n'atterrissent pas sur la balance à peser.

5. Procédé d'inspection d'état d'expulsion selon l'une quelconque des revendications 1 à 4, dans lequel, dans l'étape d'inspection, un poids de référence est calculé en multipliant un nombre de gouttelettes qui ont atterri sur une plate-forme de pesage de la balance à peser par une quantité d'expulsion cible et est comparé aux données de valeur de poids, et, lorsqu'une quantité de différence entre le poids de référence et les données de valeur de poids est plus importante qu'un seuil défini, une anomalie est déterminée.

6. Procédé d'inspection d'état d'expulsion selon l'une quelconque des revendications 1 à 5, dans lequel l'étape d'inspection inclut les étapes suivantes :
(A) une étape consistant à ajouter une étiquette à une gouttelette détectée sur la base des données d'événement ;
(B) une étape consistant à détecter une gouttelette avec une vitesse de vol anormale sur la base des données d'événement ;
(C) une étape consistant à détecter un nombre de gouttelettes qui n'atterrissent pas sur la balance à peser sur la base d'une direction de vol d'une gouttelette détectée à partir des données d'événement ;
(D) une étape consistant à calculer un nombre de gouttelettes ayant les étiquettes différentes les unes des autres parmi des gouttelettes détectées dans les étapes (B) et (C) ; et
(E) une étape consistant à déterminer qu'il y a une anomalie de vol lorsqu'un rapport du nombre de gouttelettes calculé dans l'étape (D) relativement à un nombre de gouttelettes éjectées dans l'étape d'éjection est d'un certain niveau ou plus.

7. Procédé d'inspection d'état d'expulsion selon la revendication 6, comprenant en outre une étape consistant à inspecter une quantité d'expulsion par gouttelette du dispositif d'expulsion (10, 110) sur la base d'un nombre de gouttelettes obtenu en soustrayant le nombre de gouttelettes calculé dans l'étape (D) du nombre de gouttelettes éjectées dans l'étape d'éjection.

8. Procédé d'inspection d'état d'expulsion selon l'une quelconque des revendications 1 à 7, dans lequel, dans l'étape d'éjection, une gouttelette expulsée à partir du dispositif d'expulsion (10, 110) a un poids plus petit qu'une résolution de mesure de la balance à peser, et l'expulsion d'une gouttelette à partir du dispositif d'expulsion (10, 110) est répétée au moins jusqu'à ce que la résolution de mesure de la balance à peser soit dépassée.

9. Procédé d'inspection d'état d'expulsion selon l'une quelconque des revendications 1 à 8, dans lequel, dans l'étape d'éjection, l'expulsion d'une gouttelette à partir du dispositif d'expulsion (10, 110) est répétée au moins jusqu'à ce que dix fois la résolution de mesure soit dépassé.

10. Dispositif d'inspection d'état d'expulsion (40), comprenant :
un dispositif de stockage qui stocke un programme d'inspection d'état d'expulsion pour inspecter une quantité d'expulsion d'un dispositif d'expulsion (10, 110) qui expulse des gouttelettes ; et un dispositif de traitement configuré pour exécuter le programme d'inspection d'état d'expulsion,
dans lequel le programme d'inspection d'état d'expulsion inclut :
un moyen configuré pour acquérir, en provenance d'un capteur d'événement (20, 220), des données d'événement de gouttelettes éjectées à partir du dispositif d'expulsion (10, 110) disposé pour faire face à une balance à peser ;
un moyen configuré pour acquérir, en provenance de la balance à peser, des données de valeur de poids des gouttelettes éjectées à partir du dispositif d'expulsion (10, 110) ; et
un moyen d'inspection de gouttelette configuré pour inspecter une quantité d'expulsion du dispositif d'expulsion (10, 110) sur la base des données de valeur de poids et des données d'événement,
dans lequel le moyen d'inspection de gouttelette est configuré pour inspecter le dispositif d'expulsion (10, 110) pour déterminer s'il existe une anomalie de vol, sur la base des données d'événement.

11. Système d'inspection de gouttelette, comprenant :
un dispositif d'expulsion (10, 110) ayant un orifice d'expulsion à travers lequel une matière liquide est expulsée en une forme d'une gouttelette ;
une balance à peser (30, 230) configurée pour mesurer un poids de matière liquide expulsée à partir du dispositif d'expulsion (10, 110) et produire en sortie des données de valeur de poids ;
un capteur d'événement (20, 220) configuré pour produire en sortie des données d'événement en fonction d'une quantité de changement d'une quantité de lumière reçue en provenance d'une étendue de réception de lumière entre l'orifice d'expulsion et la balance à peser (30, 230) ; et
un dispositif d'inspection d'état d'expulsion (40) configuré pour inspecter une quantité d'expulsion du dispositif d'expulsion (10, 110) sur la base des données de valeur de poids produites en sortie par la balance à peser (30, 230),
dans lequel le dispositif d'inspection d'état d'expulsion (40) est configuré pour inspecter le dispositif d'expulsion (10, 110) pour déterminer s'il existe une anomalie de vol, sur la base des données d'événement.

12. Système d'inspection de gouttelette selon la revendication 11, dans lequel le capteur d'événement (20, 220) inclut un premier capteur d'événement (20, 220) et un second capteur d'événement (20, 220),
le premier capteur d'événement (220A) est disposé dans une direction X qui est perpendiculaire à une direction Z depuis le dispositif d'expulsion (10, 110) vers la balance à peser (30, 230), et
le second capteur d'événement (220B) est disposé dans une direction Y qui est perpendiculaire à la direction Z depuis le dispositif d'expulsion (10, 110) vers la balance à peser (30, 230) et est perpendiculaire à la direction X.
